# EUROPEAN PATENT SPECIFICATION

(11) **EP 4 412 013 B1**
(45) Date of publication and mention of the grant of the patent: **26.11.2025**
(21) Application number: 23154516.1
(22) Date of filing: 01.02.2023
(51) Int. Cl.: H02G 1/12

(54) **STRIPPING TOOL**
ABISOLIERWERKZEUG
OUTIL DE DÉNUDAGE

(43) Date of publication of application: 07.08.2024
(73) Proprietor: Kauw Yehi Industrial Co., Ltd., New Taipei City 236 (TW)
(72) Inventor: YEN, Yu-Ting, 236 New Taipei City (TW)
(74) Representative: 2K Patentanwälte Blasberg Kewitz & Reichel

(56) References cited:
- AU-A1- 2018 374 402
- DE-A1- 2 402 187
- US-A1- 2009 126 534

## Description

### BACKGROUND

### Technical Field

The disclosure relates to a technology of a hand tool, particularly to a stripping tool.

### Related Art

General plumber and electrician works such as maintenance and piping usually require to strip outer insulated layers of various cables or wires to expose the cores in the cables or wires, so as to be ready for subsequent electric connection. Thus, there are wire strippers in the market for removing outer insulated layers of cables or wires without damaging inner cores to smooth the stripping process.

A wire stripper includes a first handle, a second handle, a first pressing member, a second pressing member and s stripping assembly. The first handle, the second handle, the first pressing member and the second pressing member are pivoted together. The stripping assembly is installed between the first pressing member and the second pressing member, and acts with the first handle and the second handle. Therefore, the first pressing member, the second pressing member and the stripping assembly may be driven to perform wire stripping by pressing the first handle and the second handle.

However, such a wire stripper has the following problems. Related elements are disposed in a limited space, so its moment arm cannot be effectively increased and causes considerable laboriousness in the using process. Also, because too many components are to be assembled, the manufacturing of the wire strippers is complicated, the structure is unstable and the cost is high.

US 2009/0126534A1, AU 2018374402A1 and DE 2402187A1 disclose different designs of cable stripping tools.

In view of this, the inventors have devoted themselves to the above-mentioned related art, researched intensively and cooperated with the application of science to try to solve the above-mentioned problems. Finally, the invention which is reasonable and effective to overcome the above drawbacks is provided.

### SUMMARY

An object of the disclosure is to provide a stripping tool, which may achieve the function of labor-saving operation and stable operation.

To accomplish the above object, the disclosure provides a stripping tool, which includes a fixed handle, a fixed clamp plate, a movable handle, a movable clamp plate, a cutting/pulling mechanism, and a driving operation mechanism. The fixed clamp plate is connected to the fixed handle. The movable handle is connected pivotally to the fixed handle and formed under the fixed clamp plate. The movable clamp plate is connected pivotally to the fixed handle and correspondingly formed above the fixed clamp plate. The cutting/pulling mechanism is disposed between the fixed clamp plate and the movable clamp plate. The driving operation mechanism includes a pushing assembly, a pressing assembly, and an action member. One end of the pushing assembly is connected to the moveable handle and another end of the pushing assembly is moveably connected to the action member. The pressing assembly is fixed to the fixed handle. One end of the action member is connected to the cutting/pulling mechanism and another end of the action member is elastically pressed by the pressing assembly. When the movable handle is triggered to rotate toward the fixed handle, the pushing assembly moves the action member and the cutting/pulling mechanism toward the pressing assembly to implement wire stripping.

The disclosure further has the following function. By the strip-shaped sliding trough, the cutting/pulling mechanism may not shift when each cutting knife is used to cut a wire or cable.

### BRIEF DESCRIPTION OF THE DRAWINGS

FIG. 1 is an assembled perspective view of the stripping tool of the disclosure;
FIG. 2 is an exploded view of the stripping tool of the disclosure;
FIG. 3 is an exploded view of the stripping tool of the disclosure from another viewpoint;
FIG. 4 is an exploded view of the driving operation mechanism tool of the disclosure;
FIG. 5 is an assembled cross-sectional view of the stripping tool of the disclosure;
FIG. 6 is a cross-sectional view of the stripping tool of the disclosure which is performing cutting; and
FIG. 7 is a cross-sectional view of the stripping tool of the disclosure which is performing pulling.

### DETAILED DESCRIPTION

The technical contents of this disclosure will become apparent with the detailed description of embodiments accompanied with the illustration of related drawings as follows. It is intended that the embodiments and drawings disclosed herein are to be considered illustrative rather than restrictive.

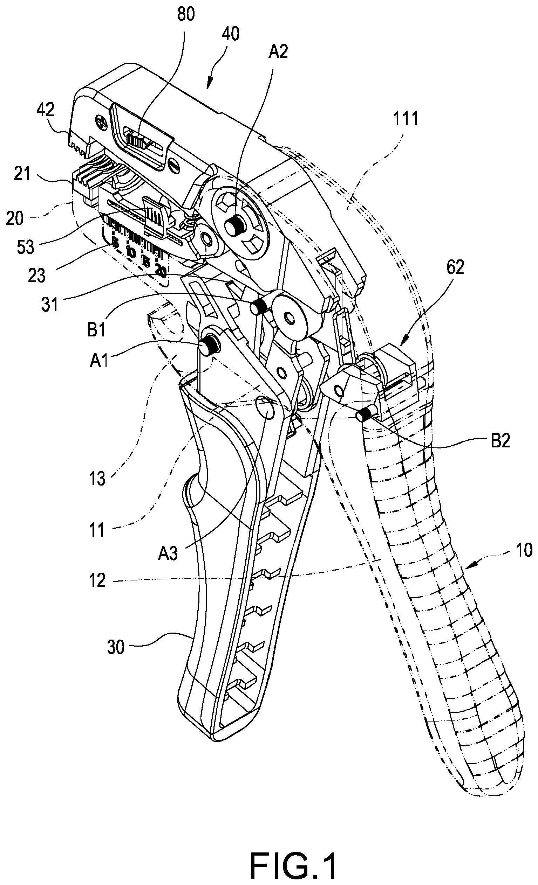

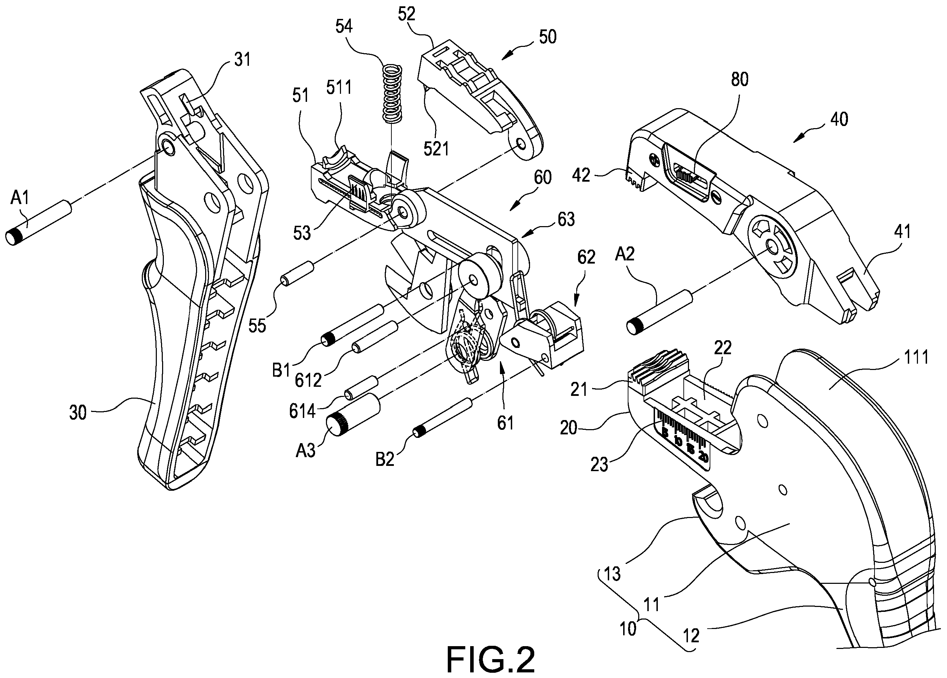

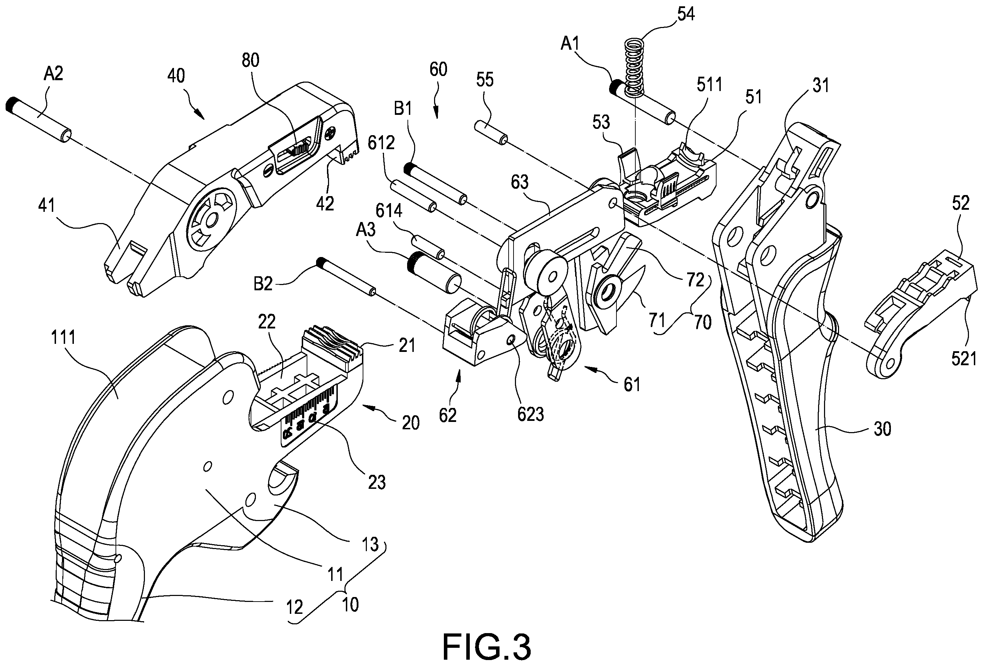

Please refer to FIGS. 1-5. The disclosure provides a stripping tool, which is a wire stripper in the embodiment and includes a fixed handle 10, a fixed clamp plate 20, a movable handle 30, a movable clamp plate 40, a cutting/pulling mechanism 50 and a driving operation mechanism 60.

The fixed clamp plate 20 is extended from the fixed handle 10. The movable handle 30 is connected pivotally to the fixed handle 10 and formed under the fixed clamp plate 20. The movable clamp plate 40 is connected pivotally to the fixed handle 10 and correspondingly formed above the fixed clamp plate 20. The cutting/pulling mechanism 50 is disposed between the fixed clamp plate 20 and the movable clamp plate 40. The driving operation mechanism 60 includes a pushing assembly 61, a pressing assembly 62 and an action member 63. One end of the pushing assembly 61 is connected to the moveable handle 30 and another end of the pushing assembly 61 is moveably connected to the action member 63. The pressing assembly 62 is fixed to the fixed handle 10. One end of the action member 63 is connected to the cutting/pulling mechanism 50 and another end of the action member 63 is elastically pressed by the pressing assembly 62.

In an embodiment, the fixed handle 10 includes a head portion 11, a stem portion 12 downward and aslant extended from the head portion 11, and a throat portion 13 downward and aslant extended from the head portion 11 and deflecting from the stem portion 12. The movable handle 30 is penetrated through by a first shaft A1 to implement the pivotal connection between the movable handle 30 and the throat portion 13 of the fixed handle 10.

In an embodiment, the movable clamp plate 40 and the fixed handle 10 are penetrated through by a second shaft A2 to implement the pivotal connection therebetween. The right side of the movable clamp plate 40 is extended with a driven arm 41. A side of the head portion 11 of the fixed handle 10 is disposed with a blocking plate 111 used for limiting the rotational stroke of the driven arm 41. A front end of the fixed clamp plate 20 is installed with lower clamping teeth 21, and a front end of the movable clamp plate 40 is connected with upper clamping teeth 42. The upper clamping teeth 42 are arranged corresponding to the lower clamping teeth 21 to jointly clamp a wire or cable. Also, the inside of the lower clamping teeth 21 is disposed with a lower trough 22 and a scale 23.

In an embodiment, the movable handle 30 and one end of the pushing assembly 61 are penetrated through by a third shaft A3 so as to make the movable handle 30 be able to drive the action member 63 and the cutting/pulling mechanism 50 to move together.

In an embodiment, the cutting/pulling mechanism 50 is disposed between the fixed clamp plate 20 and the movable clamp plate 40, and includes a lower pressing member 51, an upper pressing member 52, a stopping member 53, an elastic body 54 and a bolt 55. The upper pressing member 52, the lower pressing member 51 and the action member 63 are penetrated through by the bolt 55. The stopping member 53 is movably disposed on the lower pressing member 51 and arranged corresponding to the scale 23. The elastic body 54 is elastically clamped between the lower pressing member 51 and the upper pressing member 52. The front end of the lower pressing member 51 is disposed with a lower cutting knife 511, and the front end of the upper pressing member 52 is disposed with an upper cutting knife 521 arranged corresponding to the lower cutting knife 511.

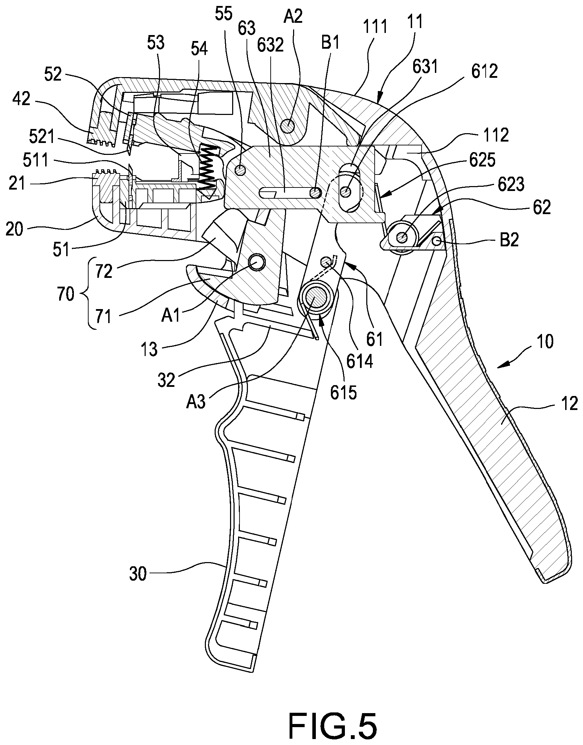

In an embodiment, a guiding trough 112 is formed in the head portion 11 of the fixed handle 10 (as shown in FIG. 5) to allow the action member 63 to move in or move out. The action member 63 is disposed with a strip-shaped sliding trough 631 and an oriented trough 632. The strip-shaped sliding trough 631 is arranged longitudinally and the oriented trough 632 is arranged transversely. A first fixing plug B1 penetrates through the oriented trough 632 and is fixed to the fixed handle 10 so as to limit the action member 63 to reciprocate transversely.

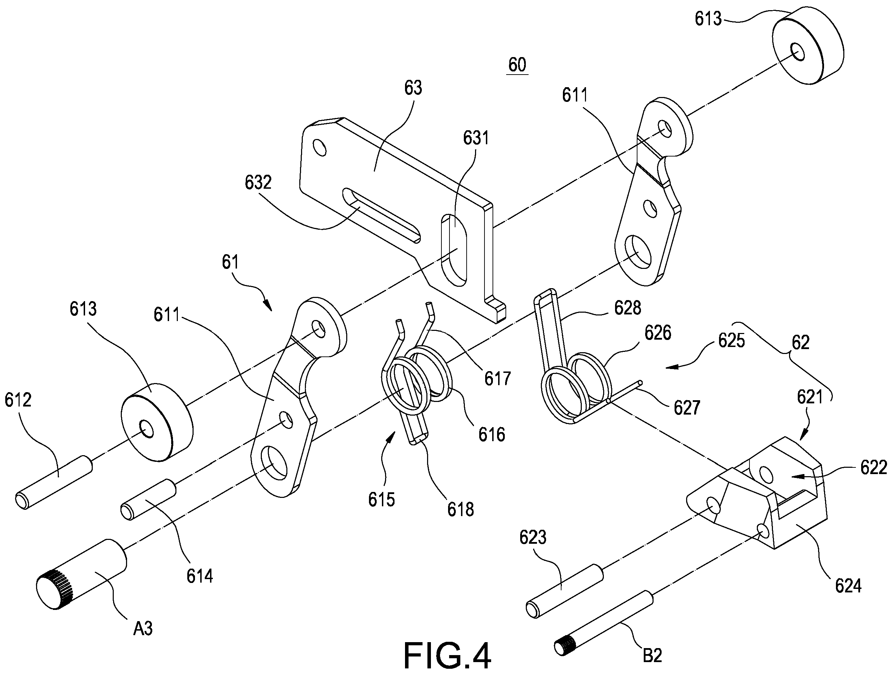

Please refer to FIG. 4. In an embodiment, the pushing assembly 61 includes two pushing rods 611 and an elastic body 615. The strip-shaped sliding trough 631 of the action member 63 and each pushing rod 611 are penetrated through by a spindle 612 so as to implement the movable connection of each pushing rod 611 and the action member 63. A part of the spindle 612 outside each pushing rod 611 is connected with a roller 613 to perform the functions of stopping, vibration absorption and noise reduction by the contact between the roller 613 and the first fixing plug B1 when the movable handle 30 returns. Also, an inserting rod 614 penetrates through each pushing rod 611 to provide positioning of an end of the elastic body 615. Furthermore, the inside of the movable handle 30 has a pressing plate 32 as shown in FIG. 5. The elastic body 615 includes a ring 616 and a first arms 617 and a second arm 618 extended from the ring 616. The third shaft A3 penetrates through the movable handle 30, each pushing rod 611 and the ring 616 of the elastic body 615. Each first arm 617 elastically abuts against the inserting rod 614, and the second arm 618 elastically abuts against the pressing plate 32 of the movable handle 30, thereby allowing the movable handle 30 to return to the original position. The first arm 617 may be designed as a single piece.

According to the invention the pressing assembly 62 is installed correspondingly at a joint between the head portion 11 and the stem portion 12 of the fixed handle 10, and is positioned by a second fixing plug B2 penetrating therethrough. The pressing assembly 62 includes a base 621 and an elastic element 625. The base 621 is formed with a receiving trough 622. The base 621 is disposed with a bolt 623. The rear of the receiving trough 622 is formed with a block 624. The elastic element 625 includes a ring 626 and a first elastic arms 627 and a second elastic arm 628 extended from the ring 626. The ring 626 is received in the receiving trough 622, and is positioned by the insert 623 penetrating through the base 621 and the ring 626. An end of each first elastic arm 627 abuts against the blocking block 624. An end of the second elastic arm 628 abuts against the action member 63 to allow the action member 63 to return. The first elastic arm 627 may be designed as a single piece.

In an embodiment, the stripping tool of the disclosure further includes a dividing knife 70. The top of the movable handle 30 is provided with an embedding trough 31. The dividing knife 70 includes a fixed knife 71 installed on the throat portion 13 of the fixed handle 10 and a movable knife 72 installed on the embedding trough 31 of the movable handle 30 corresponding to the fixed knife 71. The movable knife 72 may cut a wire or cable with respect to the fixed knife 71 with the inserting of the first shaft A1 when rotating the movable handle 30.

In an embodiment, the stripping tool of the disclosure further includes a cutting depth adjustment mechanism 80 disposed between the movable clamp plate 40 and the cutting/pulling mechanism 50. The opening width between the lower pressing member 51 and the upper pressing member 52 may be limited by the adjustment and shift of the cutting depth adjustment mechanism 80, so as to be able to match different specifications of various wires or cables to be adaptively adjusted.

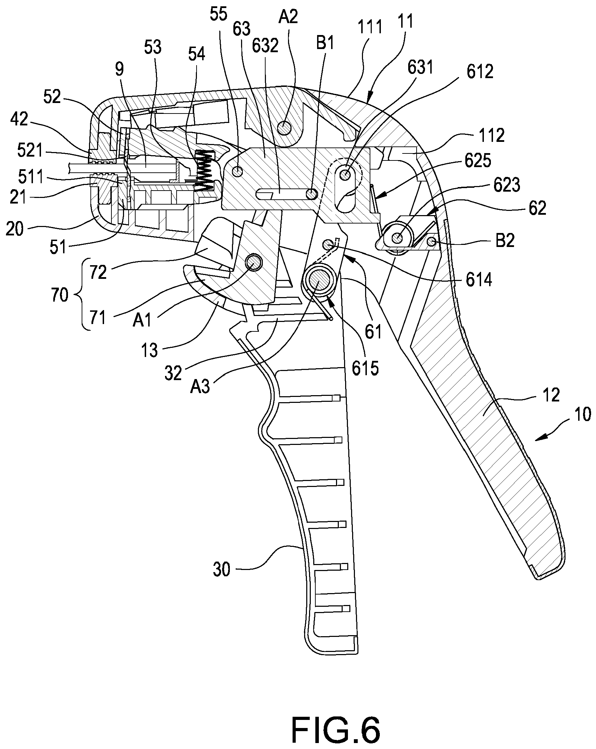

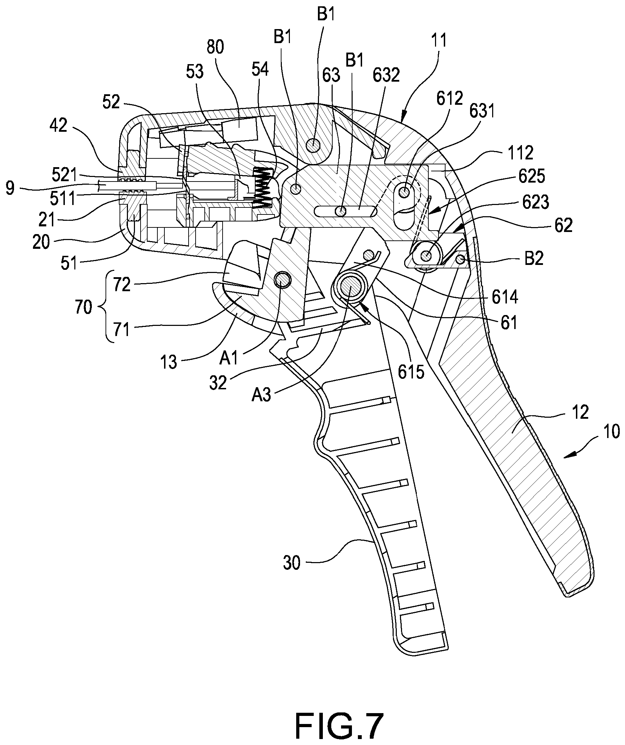

Please refer to FIGS. 6 and 7. When operating, a cable or wire 9 is placed between the upper clamping teeth 42 and lower clamping teeth 21, and an end face of the cable or wire 9 abuts against the stopping member 53. When the movable handle 30 is triggered to rotate toward the fixed handle 10, the movable clamp plate 40 may move the upper pressing member 52 toward the lower pressing member 51 to close. By clamping the cable or wire 9 with the upper clamping teeth 42 and the lower clamping teeth 21, and cutting the covering layer of the cable or wire 9 with the upper cutting knife 521 and the lower cutting knife 511, the spindle 612 of each pushing rod 611 shifts toward the top of the strip-shaped sliding trough 631 and the first fixing plug B1 is located at the right end of the oriented trough 632 of the action member 63, so as to prevent the cutting/pulling mechanism 50 from shifting during cutting the cable or wire 9 as shown in FIG. 6.

When continuously rotating the movable handle 30 toward the fixed handle 10, if its action force is greater than the elastic force of the elastic element 625 of the pressing assembly 62, each pushing rod 611 may drive the action member 63 and the cutting/pulling mechanism 50 to move toward the pressing assembly 62, and the upper cutting knife 521 and the lower cutting knife 511 may pull out the covering layer of the cable or wire 9 as shown in FIG. 7. The above structure may delay the time of the covering layer of the cable or wire 9 being pulled out, after the cutting/pulling mechanism 50 cut that, to make the whole action process more stable and smoother.

## Claims

1. A stripping tool comprising:
a fixed handle (10);
a fixed clamp plate (20), connected to the fixed handle (10);
a movable handle (30), connected pivotally to the fixed handle (10), and correspondingly disposed opposite to the fixed clamp plate (20);
a movable clamp plate (40), connected pivotally to the fixed handle (10), and correspondingly disposed opposite to the fixed clamp plate (20);
a cutting/pulling mechanism (50), disposed between the fixed clamp plate (20) and the movable clamp plate (40); and
a driving operation mechanism (60), comprising a pushing assembly (61), a pressing assembly (62) and an action member (63), wherein one end of the pushing assembly (61) is connected to the moveable handle (30) and another end of the pushing assembly (61) is moveably connected to the action member (63), the pressing assembly (62) is fixed to the fixed handle (10), and one end of the action member (63) is connected to the cutting/pulling mechanism (50) and another end of the action member (63) is elastically pressed by the pressing assembly (62);
wherein when the movable handle (30) is configured to rotate toward the fixed handle (10), the action member (63) and the cutting/pulling mechanism (50) are movable by the pushing assembly (61) and are movable toward the pressing assembly (62) for stripping wire;
**characterized in that**:
further comprising a second fixing plug (B2), wherein the pressing assembly (62) comprises a base (621) and an elastic element (625), the base (621) is fixed to the fixed handle (10) by the second fixing plug (B2), the base (621) comprises a bolt (623) and a receiving trough (622), the receiving trough (622) is defined by a blocking block (624), the elastic element (625) comprises a ring (626) and a first elastic arm (627) and a second elastic arm (628) extended from the ring (626), the ring (626) is received in the receiving trough (622), the elastic element (625) is positioned by the bolt (623) passing through the base (621) and the ring (626), the first elastic arm (627) abuts against the blocking block (624), and the second elastic arm (628) abuts against the action member (63).

2. The stripping tool of claim 1, further comprising a first shaft (A1), wherein the fixed handle (10) comprises a head portion (11), a stem portion (12) downward extended from the head portion (11) and a throat portion (13) extended from the head portion (11) and deflecting from the stem portion (12), and the movable handle (30) is connected pivotally with the throat portion (13) through the first shaft (A1).

3. The stripping tool of claim 2, further comprising a dividing knife (70), wherein the movable handle (30) comprises an embedding trough (31), the dividing knife (70) comprises a fixed knife (71) installed on the throat portion (13) and a movable knife (72) installed on the embedding trough (31) corresponding to the fixed knife (71), and the first shaft (A1) passes through the fixed knife (71) and the movable knife (72).

4. The stripping tool of claim 1, further comprising a second shaft (A2), wherein the movable clamp plate (40) is connected pivotally to the fixed handle (10) through the second shaft (A2), the movable clamp plate (40) comprises a driven arm (41) extended therefrom, and the fixed handle (10) comprises a blocking plate (111) to limit a rotational stroke of the driven arm (41).

5. The stripping tool of claim 1, further comprising a third shaft (A3), wherein the movable handle (30) is configured to drive the action member (63) and the cutting/pulling mechanism (50) to move through one end of the pushing assembly (61) being passed through by the third shaft (A3).

6. The stripping tool of claim 1, further comprising a first fixing plug (B1), wherein the action member (63) comprises an oriented trough (632), and the first fixing plug (B1) passes through the oriented trough (632) and is fixed to the fixed handle (10) to limit a moving direction of the action member (63).

7. The stripping tool of claim 1, wherein the pushing assembly (61) comprises two pushing rods (611) and a spindle (612), the action member (63) comprises a strip-shaped sliding trough (631), and each pushing rod (611) is movably connected to the action member (63) by the spindle (612) passing through the strip-shaped sliding trough (631) and each pushing rod (611).

8. The stripping tool of claim 7, wherein the pushing assembly (61) further comprises two rollers (613), and each roller (613) is adapted to sheathed the spindle (612) and located outside each pushing rod (611).

9. The stripping tool of claim 7, further comprising a third shaft (A3), wherein the pushing assembly (61) further comprises an inserting rod (614) and an elastic body (615), the movable handle (30) comprises a pressing plate (32), the inserting rod (614) passes through each pushing rod (611), the elastic body (615) comprises a ring (616) and a first arm (617) and a second arm (618) extended from the ring (616), the third shaft (A3) passes through the movable handle (30), each pushing rod (611) and the ring (616), the first arm (617) elastically abuts against the inserting rod (614), and the second arm (618) elastically abuts against the pressing plate (32).

## Patentansprüche

1. Ein Abisolierwerkzeug mit:
einen fixierten Griff (10);
eine fixierte Klemmplatte (20), die mit dem fixierten Griff (10) verbunden ist;
einen beweglichen Griff (30), der schwenkbar mit dem fixierten Griff (10) verbunden und entsprechend gegenüber der fixierten Klemmplatte (20) angeordnet ist;
eine bewegliche Klemmplatte (40), die schwenkbar mit dem fixierten Griff (10) verbunden ist und entsprechend gegenüber der fixierten Klemmplatte (20) angeordnet ist;
einen Schneid-/Ziehmechanismus (50), der zwischen der fixierten Klemmplatte (20) und der beweglichen Klemmplatte (40) angeordnet ist; und
einen Antriebsbetätigungsmechanismus (60), der eine Schubbaugruppe (61), eine Druckbaugruppe (62) und ein Aktionselement (63) umfasst, wobei ein Ende der Schubbaugruppe (61) mit dem beweglichen Griff (30) verbunden ist und ein anderes Ende der Schubbaugruppe (61) beweglich mit dem Aktionselement (63) verbunden ist, die Druckbaugruppe (62) an dem fixierten Griff (10) befestigt ist und ein Ende des Betätigungselements (63) mit dem Schneid-/Ziehmechanismus (50) verbunden ist und ein anderes Ende des Betätigungselements (63) durch die Druckbaugruppe (62) elastisch gedrückt wird;
wobei, wenn der bewegliche Griff (30) so konfiguriert ist, dass er sich in Richtung des fixierten Griffs (10) dreht, das Aktionselement (63) und der Schneid-/Zugmechanismus (50) durch die Druckbaugruppe (61) beweglich sind und in Richtung der Druckbaugruppe (62) zum Abisolieren von Draht beweglich sind;
**dadurch gekennzeichnet, dass**:
die Pressanordnung (62) eine Basis (621) und ein elastisches Element (625) umfasst, die Basis (621) durch den zweiten Befestigungsstopfen (B2) an dem fixierten Griff (10) befestigt ist, die Basis (621) einen Bolzen (623) und eine Aufnahmemulde (622) umfasst, die Aufnahmemulde (622) durch einen Blockierblock (624) definiert ist, das elastische Element (625) einen Ring (626) und einen ersten elastischen Arm (627) und einen zweiten elastischen Arm (628) aufweist, die sich von dem Ring (626) aus erstrecken, der Ring (626) in der Aufnahmemulde (622) aufgenommen wird, das elastische Element (625) durch den Bolzen (623) positioniert wird, der durch die Basis (621) und den Ring (626) hindurchgeht, der erste elastische Arm (627) an dem Blockierblock (624) anliegt und der zweite elastische Arm (628) an dem Betätigungselement (63) anliegt.

2. Das Abisolierwerkzeug nach Anspruch 1, das ferner eine erste Welle (A1) umfasst, wobei der fixierte Griff (10) einen Kopfabschnitt (11), einen sich vom Kopfabschnitt (11) nach unten erstreckenden Stielabschnitt (12) und einen sich vom Kopfabschnitt (11) erstreckenden und vom Stielabschnitt (12) abknickenden Halsabschnitt (13) umfasst, und der bewegliche Griff (30) über die erste Welle (A1) schwenkbar mit dem Halsabschnitt (13) verbunden ist.

3. Das Abisolierwerkzeug nach Anspruch 2, das ferner ein Trennmesser (70) umfasst, wobei der bewegliche Griff (30) eine Einbettungsmulde (31) umfasst, das Trennmesser (70) ein feststehendes Messer (71), das an dem Halsabschnitt (13) angebracht ist, und ein bewegliches Messer (72) umfasst, das an der Einbettungsmulde (31) angebracht ist, die dem feststehenden Messer (71) entspricht, und die erste Welle (A1) durch das feststehende Messer (71) und das bewegliche Messer (72) verläuft.

4. Das Abisolierwerkzeug nach Anspruch 1, das ferner eine zweite Welle (A2) umfasst, wobei die bewegliche Klemmplatte (40) über die zweite Welle (A2) schwenkbar mit dem feststehenden Griff (10) verbunden ist, die bewegliche Klemmplatte (40) einen von ihr ausgehenden angetriebenen Arm (41) umfasst und der fixierte Griff (10) eine Blockierplatte (111) umfasst, um einen Rotationsschlag des angetriebenen Arms (41) zu begrenzen.

5. Das Abisolierwerkzeug nach Anspruch 1, das ferner eine dritte Welle (A3) umfasst, wobei der bewegliche Griff (30) so konfiguriert ist, dass er das Aktionselement (63) und den Schneid-/Zugmechanismus (50) so antreibt, dass sie sich durch ein Ende der Druckbaugruppe (61) bewegen, das von der dritten Welle (A3) durchlaufen wird.

6. Das Abisolierwerkzeug nach Anspruch 1, ferner umfassend einen ersten Befestigungsstopfen (B1), wobei das Aktionselement (63) eine ausgerichtete Rinne (632) umfasst und der erste Befestigungsstopfen (B1) durch die ausgerichtete Rinne (632) hindurchgeht und an dem fixierten Griff (10) befestigt ist, um eine Bewegungsrichtung des Aktionselements (63) zu begrenzen.

7. Das Abisolierwerkzeug nach Anspruch 1, wobei die Schiebebaugruppe (61) zwei Schiebestangen (611) und eine Spindel (612) umfasst, das Aktionselement (63) eine streifenförmige Gleitrinne (631) umfasst und jede Schiebestange (611) mit dem Aktionselement (63) durch die Spindel (612), die durch die streifenförmige Gleitrinne (631) und jede Schiebestange (611) hindurchgeht, beweglich verbunden ist.

8. Das Abisolierwerkzeug nach Anspruch 7, wobei die Schiebebaugruppe (61) ferner zwei Rollen (613) umfasst und jede Rolle (613) so ausgelegt ist, dass sie die Spindel (612) ummantelt und außerhalb jeder Schiebestange (611) angeordnet ist.

9. Das Abisolierwerkzeug nach Anspruch 7, das ferner eine dritte Welle (A3) umfasst, wobei die Schiebebaugruppe (61) ferner eine Einführstange (614) und einen elastischen Körper (615) umfasst, der bewegliche Griff (30) eine Druckplatte (32) umfasst, die Einführstange (614) durch jede Schiebestange (611) hindurchgeht, der elastische Körper (615) einen Ring (616) und einen ersten Arm (617) und einen zweiten Arm (618) aufweist, die sich von dem Ring (616) aus erstrecken, die dritte Welle (A3) durch den beweglichen Griff (30), jede Schubstange (611) und den Ring (616) verläuft, der erste Arm (617) elastisch an der Einschubstange (614) anliegt und der zweite Arm (618) elastisch an der Druckplatte (32) anliegt.

## Revendications

1. Un outil de dénudage avec :
une poignée fixe (10) ;
une plaque de serrage fixe (20) reliée à la poignée fixe (10) ;
une poignée mobile (30) reliée de manière pivotante à la poignée fixe (10) et disposée de manière correspondante en face de la plaque de serrage fixe (20) ;
une plaque de serrage mobile (40) reliée de manière pivotante à la poignée fixe (10) et disposée de manière correspondante en face de la plaque de serrage fixe (20) ;
un mécanisme de coupe/tirage (50) disposé entre la plaque de serrage fixe (20) et la plaque de serrage mobile (40) ; et
un mécanisme d'actionnement d'entraînement (60) comprenant un ensemble de poussée (61), un ensemble de pression (62) et un élément d'action (63), une extrémité de l'ensemble de poussée (61) étant reliée à la poignée mobile (30) et une autre extrémité de l'ensemble de poussée (61) étant reliée de manière mobile à l'élément d'action (63), l'ensemble de pression (62) est fixé à la poignée fixe (10) et une extrémité de l'élément d'action (63) est reliée au mécanisme de coupe/tirage (50) et une autre extrémité de l'élément d'action (63) est pressée de manière élastique par l'ensemble de pression (62) ;
dans lequel, lorsque la poignée mobile (30) est configurée pour tourner vers la poignée fixe (10), l'élément d'action (63) et le mécanisme de coupe/traction (50) sont mobiles à travers l'ensemble de pression (61) et sont mobiles vers l'ensemble de pression (62) pour dénuder le fil ;
**caractérisé en ce que** :
l'ensemble de pression (62) comprend une base (621) et un élément élastique (625), la base (621) est fixée à la poignée fixe (10) par le deuxième bouchon de fixation (B2), la base (621) comprend un boulon (623) et une cuvette de réception (622), l'auge de réception (622) est définie par un bloc de blocage (624), l'élément élastique (625) comprend un anneau (626) et un premier bras élastique (627) et un deuxième bras élastique (628), s'étendant à partir de la bague (626), la bague (626) est reçue dans la cavité de réception (622), l'élément élastique (625) est positionné par le boulon (623) qui traverse la base (621) et la bague (626), le premier bras élastique (627) est en contact avec le bloc de blocage (624) et le deuxième bras élastique (628) est en contact avec l'élément d'actionnement (63).

2. L'outil de dénudage selon la revendication 1, qui comprend en outre un premier arbre (A1), dans lequel la poignée fixe (10) comprend une partie de tête (11), une partie de manche (12) s'étendant vers le bas à partir de la partie de tête (11) et une partie de col (13) s'étendant à partir de la partie de tête (11) et se pliant à partir de la partie de manche (12), et la poignée mobile (30) est reliée de manière pivotante à la partie de col (13) par le premier arbre (A1).

3. L'outil de dénudage selon la revendication 2, qui comprend en outre une lame de séparation (70), la poignée mobile (30) comprenant une cavité d'enrobage (31), la lame de séparation (70) comprenant une lame fixe (71) montée sur la partie de col (13) et une lame mobile (72) montée sur la cavité d'enrobage (31) correspondant à la lame fixe (71), et le premier arbre (A1) passant par la lame fixe (71) et la lame mobile (72).

4. L'outil de dénudage selon la revendication 1, qui comprend en outre un deuxième arbre (A2), la plaque de serrage mobile (40) étant reliée de manière pivotante à la poignée fixe (10) par le deuxième arbre (A2), la plaque de serrage mobile (40) comprenant un bras entraîné (41) s'étendant à partir de celle-ci, et la poignée fixe (10) comprenant une plaque de blocage (111) pour limiter un coup de rotation du bras entraîné (41).

5. L'outil de dénudage selon la revendication 1, qui comprend en outre un troisième arbre (A3), dans lequel la poignée mobile (30) est configurée pour entraîner l'élément d'action (63) et le mécanisme de coupe/traction (50) de manière à ce qu'ils se déplacent à travers une extrémité de l'ensemble de pression (61) qui est traversée par le troisième arbre (A3).

6. L'outil de dénudage selon la revendication 1, comprenant en outre un premier bouchon de fixation (B1), dans lequel l'élément d'action (63) comprend une rainure alignée (632) et le premier bouchon de fixation (B1) passe à travers la rainure alignée (632) et est fixé à la poignée fixe (10) pour limiter une direction de déplacement de l'élément d'action (63).

7. L'outil de dénudage selon la revendication 1, dans lequel l'ensemble coulissant (61) comprend deux barres de poussée (611) et une broche (612), l'élément d'action (63) comprend une goulotte de glissement en forme de bande (631), et chaque barre de poussée (611) est reliée de manière mobile à l'élément d'action (63) par la broche (612) qui passe à travers la goulotte de glissement en forme de bande (631) et chaque barre de poussée (611).

8. L'outil de dénudage selon la revendication 7, dans lequel l'ensemble coulissant (61) comprend en outre deux galets (613), chaque galet (613) étant conçu pour envelopper la broche (612) et étant disposé à l'extérieur de chaque barre coulissante (611).

9. L'outil de dénudage selon la revendication 7, qui comprend en outre un troisième arbre (A3), l'ensemble coulissant (61) comprenant en outre une tige d'insertion (614) et un corps élastique (615), la poignée mobile (30) comprenant une plaque de pression (32), la tige d'insertion (614) passant à travers chaque tige coulissante (611), le corps élastique (615) comprend une bague (616) et un premier bras (617) et un deuxième bras (618) qui s'étendent à partir de la bague (616), le troisième arbre (A3) passe à travers la poignée mobile (30), chaque tige de poussée (611) et la bague (616), le premier bras (617) est en contact élastique avec la tige de poussée (614) et le deuxième bras (618) est en contact élastique avec le plateau de pression (32).
